Europäisches Patentamt

**European Patent Office**  (11) Veröffentlichungsnummer: **0 092 609**

**Office européen des brevets**  **B1**

(12)  # EUROPÄISCHE PATENTSCHRIFT

(45) Veröffentlichungstag der Patentschrift: 04.02.87    (51) Int. Cl.⁴: **C 08 J 7/04, C 09 D 3/48**

(21) Anmeldenummer: 82111537.5

(22) Anmeldetag: 13.12.82

(54) **Mit einem 3-Schichtüberzug ausgerüstete Kunststofformkörper und ein Verfahren zur Herstellung der Ausrüstung.**

(30) Priorität: 24.12.81 DE 3151350

(43) Veröffentlichungstag der Anmeldung:
02.11.83 Patentblatt 83/44

(45) Bekanntmachung des Hinweises auf die Patenterteilung:
04.02.87 Patentblatt 87/6

(84) Benannte Vertragsstaaten:
DE FR GB IT NL

(56) Entgegenhaltungen:
EP-A-0 017 187
WO-A-80/00940
CH-A-479 412
FR-A-2 181 028
GB-A-2 066 101
US-A-3 707 397

(73) Patentinhaber: BAYER AG, Konzernverwaltung RP Patentabteilung, D-5090 Leverkusen 1 Bayerwerk (DE)

(72) Erfinder: Schönfelder, Manfred, Dr., Höhenstrasse 126, D-5090 Leverkusen 3 (DE)
Erfinder: Steinberger, Helmut, Dr., Winand- Rossi-Strasse 36, D-5090 Leverkusen 1 (DE)
Erfinder: Schmid, Helmut, Dr., Wedelstrasse 69, D-4150 Krefeld (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Kunststofformkörper, insbesondere transparente Kunststofformkörper, die mit einem Überzug aus drei nacheinander eingebrannten, chemisch unterschiedlichen Schichten ausgerüstet sind, sowie ein Verfahren zur Herstellung der Ausrüstung. Durch die spezielle Ausrüstung wird die Kratz-, Abrieb-, Witterungs- und Vergilbungsbeständigkeit der Kunststoffoberflächen erheblich verbessert und die Transparenz des Kunststofformkörpers erhalten. Die erste Schicht (Grundierschicht) wird aus einem härtbaren Acrylharz und einem Aminoplastharz, die zweite Schicht aus einem thermoplastischen Acrylharz, einem Weichmacher und einem verkappten Polyisocyanat und die dritte Schicht (Deckschicht) aus mindestens einem teilhydrolysierten Organosilan, einem α,ω-Dihydroxy-polydimethyl-siloxan, einem Kieselsäuresol, und mindestens einem verkappten Polyisocyanat als Bindemittel in Gegenwart einer wasserlöslichen organischen oder anorganischen Säure aufgebaut. Der Dreischichtüberzug enthält UV-Absorber, Lichtschutzmittel und gegebenenfalls übliche Hilfsmittel.

Aus der DE-AS 1 694 273 (= US-Patent 3 582 398) ist es bekannt, die Oberfläche von Polycarbonatformkörpern mit einer UV-Absorber enthaltenden, 0,5 bis 20 gew.-%igen Lösung eines Polymethylmethacrylates zu überziehen und anschließend das Lösungsmittel zu entfernen. Durch den eingebrannten Überzug soll eine erhöhte Lichtdurchlässigkeit des Formkörpers erreicht werden. Offenbar besitzen derart ausgerüstete Oberflächen der Polycarbonatformkörper jedoch eine ungenügende Kratz- und Abriebbeständigkeit, denn, um diese zu verbessern, beschreibt die gleiche Anmelderin in der US-PS 4 224 378 Polycarbonatformkörper, die mit einem thermoplastischen Acrylharz, insbesondere Polymethylmethacrylat, in einer Dicke von 50 bis 25 000 nm grundiert und eingebrannt werden, und anschließend mit einer Deckschicht, die aus einem teilhydrolysierten Alkyl- oder Aryltrialkoxysilan (= härtbares Organopolysiloxan) erzeugt wird, versehen werden. Die thermoplastische Grundierschicht kann UV-Absorber, Mattierungsmittel und oberflächenaktive Mittel (Surface-active agents) enthalten, und die vernetzte Polysiloxan-Deckschicht kolloidale Kieselsäure. Die so erhaltenen Polycarbonatformkörperoberflächen sollen hart, abriebfest und Lösungsmittelbeständig sein. Wie jedoch aus dem Vergleichsversuch 1 der vorliegenden Anmeldung eindeutig hervorgeht, erhält man gemäß den Beispielen 2, 3 und 4 der abgehandelten Schrift (Grundierschicht ca. 500 nm, Deckschicht ca. 6000 nm) zwar eine optisch einwandfreie, transparente Beschichtung ohne Rißbildung in der Deckschicht, jedoch ist die Witterungsbeständigkeit noch unzureichend. Bereits nach ca. 1000 Stunden künstlicher Bewitterung wird ein Abblättern der Schichten und ein Vergilben des Polycarbonats beobachtet. Wird eine Grundierschicht von ca. 11900 nm und eine Deckschicht von ca. 6000 nm erzeugt, so weist die eingebrannte Deckschicht eine starke Rißbildung auf, d.h., für den praktischen Einsatz sind solche Formkörper ungeeignet.

Es ist ferner bekannt, die Oberflächen von Kunststofformkörpern aus Polycarbonat bzw. thermoplastischen Poly(meth)-acrylaten mit wärmehärtbaren Acrylharzen zu grundieren und mit einer Deckschicht aus härtbaren Organopolysiloxanen auszurüsten (vgl. US-PS 3 707 397), um die Härte und Lösungsmittelbeständigkeit der Oberflächen zu verbessern. Gemäß der US-PS 4 224 378, Spalte 1, Zeile 57 bis Spalte 2, Zeile 3, wird bei derartigen Überzügen die Abriebfestigkeit der Deckschicht und die Haftfestigkeit der Deckschicht mit zunehmender Dicke der Grundierschicht verschlechtert. Gemäß Vergleichsversuch 2 vorliegender Anmeldung werden bei Einsatz wärmehärtbarer Acrylharze als Grundierschicht (Dicke 250 nm) und härtbarer Organopolysiloxane als Deckschicht (Dicke: 12500 nm) eine völlig unzureichende Witterungs- und Vergilbungsbeständigkeit beobachtet. Bei einer Grundierschicht von 12500 nm und einer Deckschicht von 12500 nm wird beim Einbrennen der Deckschicht Rißbildung in der Deckschicht festgestellt.

Aus der DE-OS 28 42 048 ist es schließlich bekannt, transparente oder opake Kunststofformkörper aus beispielsweise Polyacrylharzen, Polycarbonat usw. mit einem Dreischicht-Überzug zu versehen, der gut auf dem Formkörper haften und ihm Kratzfestigkeit und Anti-Beschlagungseigenschaften verleihen soll. Die Grundierungsschicht wird aus einem härtbaren Acrylharz, die zweite Schicht aus a) einem Gemisch von vollständig oder teilweise veretherten Methylolmelaminen und einem gegebenenfalls oxalkylierten Polyol mit einem Molekulargewicht unter 1500 und/oder b) aus einem härtbaren Acrylharz, und die dritte Schicht (Deckschicht) aus a) einer Mischung oder Präkondensat von einem teilweise oder vollständig veretherten Methylolmelamin und einem oxethylierten Polyol mit einem Molekulargewicht von 100 bis 2000 und b) einem oberflächenaktiven Mittel hergestellt.

Die gemäß vorstehender Druckschrift erhaltenen, beschichteten Polycarbonatformkörper weisen zwar nach dem Einbrennen eine gewisse Verbesserung der Kratzfestigkeit gegenüber nicht beschichteten Formkörpern auf, nach Bewitterung jedoch sinkt die Kratzfestigkeit nahezu auf die Werte der nicht beschichteten Polycarbonatformkörper ab.

Die meisten Kunststoffe sind für zahlreiche Anwendungsgebiete wegen unzureichender Kratz- und Abriebbeständigkeit sowie mangelnder Witterungs- und Vergilbungsbeständigkeit nur bedingt geeignet. Dies trifft beispielsweise für thermoplastische Kunststoffteile, insbesondere transparente, aus Polycarbonat, Polymethylmethacrylat, Polyamid und Polyester zu. Zwar gelingt es, die Kratz- und Abriebbeständigkeit durch Überzüge mit thermisch härtenden Beschichtungsmitteln auf Basis z.B. von Polysiloxan-Systemen erheblich zu verbessern, jedoch ist die Witterungsbeständigkeit unzureichend, wodurch Enthaftung des Kratzfestbeschichtungsmittels bzw. Vergilbung des Kunststoffes (beispielsweise bei Polycarbonat) bewirkt wird. Eine deutliche Verbesserung der Witterungs- bzw. Vergilbungsbeständigkeit wird durch die Mitverwendung eines UV-Absorber und Lichtschutzmittel enthaltenden Primers (Grundierungsmittel) erzielt. Im Vergleich zu nicht grundierten Kratzfestbeschichtungen tritt die Enthaftung durch den Primer erst deutlich später auf. Die Schutzwirkung durch den Primer wird aber dadurch begrenzt, daß mit zunehmender Dicke der Grundierschicht und/oder zunehmender UV-Absorber-Konzentration Rißbildung in der Polysiloxanschicht (Deckschicht) bereits während des Einbrennvorganges des Kratzfestmittels (Deckschicht) auftritt.

Aufgabe der vorliegenden Erfindung war es daher, Kunststofformkörper mit einem Überzug auszurüsten, der ohne Rißbildung nicht nur eine hohe Abrieb- und Kratzfestigkeit aufweist, sondern dem Formkörper gleichzeitig auch ausgezeichnete Witterungs- und Vergilbungsbeständigkeit verleiht. Natürlich sollte der Überzug fest auf dem Formkörper haften, auch noch nach längerer Bewitterung.

Die Aufgabe wurde dadurch gelöst, daß der Kunststofformkörper mit einem Überzug aus drei nacheinander eingebrannten, chemisch unterschiedlichen Schichten ausgerüstet wurde, wie es im Patentanspruch zum Ausdruck kommt. Kunststofformkörper, ausgerüstet mit einem Überzug aus drei nacheinander eingebrannten Schichten, dadurch gekennzeichnet, daß die erste, der Oberfläche des Kunststofformkörpers nächstliegende, eingebrannte Schicht aus einem Bindemittelgemisch aus 20-40 Gew.-% härtbaren Acrylharz aus copolymerisierten Einheiten von

A. 50-95 Gew.-% mindestens eines (Meth)Acrylsäurealkylesters mit 1-8 C-Atomen in der Alkoholkomponente und

B. 5-50 Gew.-% mindestens eines weiteren olefinisch ungesättigten Monomeren, das mindestens eine der Gruppen Hydroxy-, Carboxy-,Carbamoyl -($H_2N$-CO-), N-Metylol -carbamoyl-(HO-$CH_2$-NH-CO-), N-Alkoxy-methyl-carbamoyl-(R-O-$CH_2$-NH-CO-, R = $C_1$-$C_4$-Alkyl) oder 1,2-Epoxygruppen enthält und

C. gegebenenfalls bis zu 30 Gew.-% mindestens eines aliphatischen oder aromatischen Vinyl- oder Vinylidenmonomeren - die Summe der Gewichtsprozente A + B + C beträgt 100-und 60 - 80 Gew.-% Aminoplastharz wie eine im Melaminaldehydharz erzeugt worden ist und mindestens 1 bis 100 Gew.-% eines UV-Absorbers wie einer Benzotrialzolverbindung oder eines Benzophenonderivates und mindestens 0.1 bis 5 Gew.-% eines üblichen Lichtschutzmittels enthält, die zweite eingebrannte Schicht aus 20-60 Gew.-% eines thermoplastischen Acrylharzes, das ein Polymerisat mit polymerisierten Einheiten von

I. 100 bis 20 Gew.-% eines (Meth)Acrylsäurealkylesters mit 1 bis 12 C-Atomen in der Alkoholkomponente, vorzugsweise Methylmethycrylat, und

II. 0 bis 80 Gew.-% mindestens eines, von I verschiedenen (Meth)Acrylsäurealkylesters mit 1 bis 12 C-Atomen in der Alkoholkomponente, vorzugsweise n-Butyl- oder 2-Ethylhexyl-acrylat oder deren Mischungen, und gegebenenfalls

III. bis zu 30 Gew.-% Styrol, durch $C_1$-$C_4$-Alkyl in der Vinylgruppe und/oder im Benzolkern substituiertes Styrol, Vinylacetat, (Meth)Acrylamid, (Meth)-Acrylsäure, Acrylnitril oder deren Mischungen [ (Meth)Acrylamid und (Meth)Acrylsäure nur bis zu 5 Gew.-%], die Summe der Prozentgehalte beträgt 100, ist und aus

20-60 Gew.-% eines verkappten Polyisocyanats und 20-60 Gew.-% eines Weichmachers, hergestellt worden ist und die dritte eingebrannte Schicht aus einem Bindemittelgemisch aus 56-85 Gew.-% eines teilhydrolysierten Organosilans, 0.02 bis 4,5 Gew.-% eines α,ω-Dihydroxypolydimethylsiloxans und 0,5 bis 4,3 Gew.-% eines verkappten Polyisocyanats in Gegenwart einer wasserlöslichen, organischen oder anorganischen Säure gebildet worden ist und mindestens einen UV-Absorber enthält.

Die einzelnen Schichten 1 bis 3 können zusätzlich noch übliche Hilfsmittel enthalten. Gegenstand der Erfindung ist weiter ein Verfahren zur Herstellung der Ausrüstung.

Kunststofformkörper im Sinne der Erfindung bestehen aus solchen thermoplastischen Polymeren, die bei den Einbrenntemperaturen der Überzugsschichten, d.h. bei ca. 30 bis 180°C, vorzugsweise 100-130°C, ihre Formstabilität nicht wesentlich verändern. Vorzugsweise bestehen die Formkörper aus Polycarbonaten, Poly(meth)acrylathomo- und -copolymerisaten und Polyamiden, insbesondere aus Polycarbonaten oder thermoplastischen aliphatischen und/oder aromatischen Polyestern und Polymethylmethacrylat. Polycarbonate sind am meisten bevorzugt.

Die Kunststofformkörper können transparent farblos, transparent gefärbt, opak, pigmentiert und/oder mit Fullstoffen versehen sein oder durch anorganische oder organische Fasern, Fäden, Gewebe, Gewirke, Vliese oder Netze verstärkt sein. Vorzugsweise sind die Kunststofförmkörper transparent farblos und ebenso die erfindungsgemäß ausgerüsteten Kunststofformkörper. Unter Kunststofformkörpern werden beispielsweise Tafeln, Platten, Folien, Sicht- und Schutzscheiben für Kraftfahrzeuge, für industrielle Geräte und Haushaltsgeräte, Helmvisiere, optische Linsen, Sichtabdeckungen, Sichtblenden, Gehäuse für Haushaltsartikel, für medizinische, industrielle und elektrische Geräte, Helme, Stäbe, Profile, Masten, Werkzeuggriffe, Karosserieformteile, Tischplatten, Möbel, Möbelteile usw. verstanden.

Die den Kunststofformkörpern zugrundeliegenden Polymeren sind allgemein bekannt. Beispielsweise sind Polycarbonate von Hermann Schnell in Chemistry and Physics of Polycarbonates, 1964, Interscience Publishers New York; Poly(meth)-acrylat-Homo- und Poly(meth)acrylat-Copolymerisate u.a. in Houben-Weyl, Methoden der Organischen Chemie, Georg Thieme Verlag, Stuttgart, 1961, 4. Auflage, Bd. XIV/1, Seite 1033-1079, und Polyamide in Houben-Weyl, Methoden der Organischen Chemie, Georg Thieme Verlag, Stuttgart, 1963, 4. Auflage, Bd. XIV/2, Seite 99-191 beschrieben.

Besonders geeignete Polycarbonate haben mittlere Molekulargewichte (Gewichtsmittel) Mw zwischen 10.000 und 100.000, vorzugsweise zwischen 20.000 und 40.000, ermittelt durch Messungen der relativen Viskosität in $CH_2Cl_2$ und bei 25°C und einer Konzentration von 0,5 Gew.-%.

Die Kunststofformkörper gemäß vorliegender Anmeldung sind mit einem Überzug aus drei nacheinander eingebrannten Schichten ausgerüstet, wobei die eingebrannten, vorzugsweise transparenten Schichten, ausgehend von der der Oberfläche des Formkörpers nächstliegenden Schicht, folgende Dicken aufweisen:

1. Schicht (Grundierschicht) 100 bis 30.000 nm, vorzugsweise 2.000 bis 8.000 nm;

2. Schicht 10 bis 5.000 nm, vorzugsweise 100 bis 2.000 nm;

3. Schicht (Deckschicht) 1.000 bis 30.000 nm, vorzugsweise 4.000 bis 10.000 nm.

Die erste Schicht des Überzugs (Grundierschicht) wird durch Einbrennen eines härtbaren Acrylharzes und eines Aminoplastharzes hergestellt und enthält mindestens einen UV-Absorber und mindestens ein Lichtschutzmittel, sowie gegebenenfalls weitere übliche Hilfsstoffs.

Unter härtbaren Acrylatharzen werden Copolymerisate aus copolymerisierten Einheiten von

A. 50-95 Gew.-% mindestens eines (Meth)Acrylsäurealkylesters mit 1-8 C-Atomen in der Alkoholkomponente und

B. 5-50 Gew.-% mindestens eines weiteren olefinisch

   ungesättigten Monomeren, das min destens eine der Gruppen Hydroxy-, Carboxy-, Carbamoyl-($H_2N$-CO-), N-Me thylol-carbamoyl-(HO-$CH_2$-NH-CO-), N-Al koxymethyl-carbamoyl-(R-O-$CH_2$-NH-CO-, R = $C_1$-$C_4$-Alkyl) oder 1,2-Epoxy gruppen enthält und

C. gegebenenfalls bis zu 30 Gew.-% mindestens

   eines aliphatischen oder aromatischen Vinyl

oder Vinylidenmonomeren - die Summe der Gewichtsprozente A + B + C beträgt 100 - verstanden.

Die durchschnittlichen Molekulargewichte Mn der härtbaren-Acrylharze liegen vorzugsweise zwischen 1000-80000, insbesondere 1000-10000, gemessen durch Gelpermeationschromatographie.

Die härtbaren Acrylharze mit eingebauten Carboxygruppen können mit Epoxidverbindungen mit mindestens einer 1,2-Epoxidgruppe (z.B. Diepoxiden auf Basis von Bisphenol A) mindestens teilweise modifiziert (verestert) sein. Andererseits können 1,2-Epoxidgruppen enthaltende, härtbare Acrylatharze mit aliphatischen gesättigten $C_1$-$C_{12}$-Mono-carbonsäuren oder mit cycloaliphatischen $C_7$-$C_{12}$-Dicarbonsäuren oder deren Anhydriden mindestens teilweise verestert sein.

Monomere der Gruppe B sind beispielsweise 2-Hydroxyethyl(meth)acrylat, 2-Hydroxypropyl(meth)acrylat, 4-Hydroxybutyl(meth)acrylat, (Meth)Acrylsäure, Maleinsäure, Fumarsäure, Itaconsäure, (Meth)Acrylamid, N-Methylol(meth)acrylamid, N-Alkoxymethylether des (Meth)Acrylsäureamids mit 1-4 C-Atomen in der Alkylgruppe, (Meth)Acrylsäureglycidester, Fumarsäurediglycidester usw..

Zu Gruppe C gehören beispielsweise Styrol, durch $C_1$-$C_4$-Alkylgruppen substituiertes kern- und seitenkettensubstituiertes Styrol, Vinylacetat, (Meth)Acrylnitril, Vinylchlorid, Vinylidenchlorid u.a.

Die härtbaren Acrylharze sind bekannt bzw. werden nach bekannten Methoden hergestellt (vgl. US-PS 2 604 463, 2 729 625, 2 681 897, 3 082 184, 3 330 814, 3 375 227, DE-PS 1 965 740, DE-OS 2 057 577, GB-PS 1 227 398, 1 515 868).

Bevorzugte härtbare Acrylharze sind Copolymerisate aus copolymerisierten Einheiten von

1. 55-70 Gew.-% Methylmethacrylat,

2. 10-20 Gew.-% mindestens eines Hydroxyalkyl(meth)acrylats mit 2-4 C-Atomen in der Alkylgruppe und

3. 10-35 Gew.-% mindestens eines Acrylsäurealkylesters mit 1-8 C-Atomen im Alkoholrest oder mindestens eines Methacrylsäurealkylesters mit 2-8 C-Atomen im Alkoholrest oder deren Mischungen.

Die für die Grundierschicht verwendbaren Aminoplastharze sind beispielsweise Melaminaldehydharze, insbesondere Melaminformaldehydharze, deren Methylolgruppen ganz oder teilweise durch aliphatische, gesättigte Monoalkohole mit 1-4 C-Atomen verethert sein können. Andere Aminoplaste leiten sich von Harnstoff, Dicyandiamid, Ammelin, Benzoguenamin und anderen, durch Amino und Phenyl, Alkyl, Halogen oder Hydroxygruppen substituierten 1,3,5-Triazinen ab, sind mit Aldehyden, insbesondere Formaldehyd, modifiziert und können mit aliphatischen, gesättigten $C_1$-$C_4$-Monoalkoholen

ganz oder teilweise verethert sein. Die Aminoplastharze sind seit langem bekannt (vgl. z.B. US-PS 2 681 987). Bevorzugt werden die Aminoplaste auf Basis von Melamin, insbesondere Hexamethoxymethylmelamid.

Als Bindemittel für die Grundierung (Überzugsschicht 1) wird ein Gemisch aus Aminoplastharz und härtbarem Acrylharz eingesetzt, das vorzugsweise zu 20-40 Gew.-% aus härtbarem Acrylharz und 60-80 Gew.-% aus Aminoplast besteht. In der eingebrannten ersten Schicht (Grundierschicht) sind die kondensierten Einheiten der beiden Bestandteile in etwa dem gleichen Gewichtsverhältnis enthalten (abzüglich der bei der Kondensation während des Einbrennvorganges abgespaltenen Mengen an Wasser und/oder Alkoholen).

Die Grundierschicht enthält zum Schutz des Kunststoffformkörpers mindestens einen üblichen UV-Absorber in Mengen von 1 bis 100 Gew.-%, vorzugsweise 20 bis 30 Gew.-%, stets bezogen auf die Summe der Mengen an Aminoplast und härtbarem Acrylharz. Derartige UV-Absorber sind beispielsweise Benztriazolverbindungen, wie sie unter anderem in der DE-PS 1 185 610 = US-PS 3 189 615 ausführlich beschrieben sind. Bevorzugt sind 2-(2'-Hydroxy-3',5'-diamyl-phenyl)benztriazol und 2-(2'-Hydroxy-5'-methylphenyl)-benztriazol.

Eine andere Gruppe von UV-Absorbern leitet sich von mindestens eine Hydroxygruppe enthaltenden Benzophenonderivaten ab. Sie sind ausführlich beispielsweise in US-PS 3 043 709, 3 049 443, 2 693 492, 2 853 521 und 2 777 828 beschrieben. Bevorzugt von den vorgenannten Benzophenonderivaten sind 2-Hydroxy-4-methoxy-benzophenon, 4-Decycloxy-2-hydroxybenzophenon, 2,2'-4,4'-Tetrahydroxybenzophenon, 2,4-Dihydroxybenzophenon, 2-Hydroxy-4-n-octyloxybenzophenon und 2-Hydroxy-4-n-dodecyloxybenzophenon.

Von den verschiedenen UV-Absorber-Klassen, die in der Grundierschicht enthalten sein können, werden die Benztriazolverbindungen bevorzugt.

Zum Schutze der Grundierung enthält die Grundierschicht noch ein Lichtschutzmittel in Mengen von 0,1 bis 5 Gew.-%, vorzugsweise 0,5 bis 2 Gew.-%, bezogen auf die Summe der Mengen an Aminoplast und härtbarem Acrylharz. Derartige Lichtschutzmittel sind beispielsweise sterisch gehinderte Amine, wie sie unter anderen in DE-OS 24 17535 (= US-PS 4 123 418 und US-PS 4 110 304) und DE-OS 24 56 864 (= US-PS 3 993 655 und 4 221 701) beschrieben sind. Bevorzugte Verbindungen sind: Bis-(1,2,2,6,6-pentamethyl-piperidyl-4)-sebacat, Bis-(2,2,6,6-tetramethylpiperidyl-4)-sebacat, n-Butyl-(3,5-di-tert.-butyl-4-hydroxybenzyl)malonsäure-bis (1,2,2,6,6-pentametyl-piperidyl-4)ester.

In der Grundierschicht können noch übliche Hilfsstoffe, zum Beispiel Katalysatoren, wie p-Toluolsulfonsäure usw., Verlaufsmittel, wie Celluloseester, Oligoalkylacrylate mit 2-8 C-Atomen in der Alkylgruppe, Silikonöle usw. und Entlüftungsmittel, wie hochsiedende Lösungsmittel, in üblichen Mengen von je (0,1 bis 2 Gew.-%, bezogen auf Bindemittel aus Aminoplast und härtbarem Acrylharz) vorhanden sein. Falls keine klar transparenten Kunststofformkörper, sondern pigmentierte, gefüllte oder verstärkte Formkörper mit Überzügen ausgerüstet werden sollen, kann die Grundierschicht noch im Bindemittel gelöste Farbstoffe oder Pigmente enthalten.

Die Herstellung des Grundiermittels kann in der Weise erfolgen, daß härtbares Acrylharz und Aminoplast in einem organischen Lösungsmittel, wie Toluol, Xylol, Ethylglykolacetat, Methylethylketon, Isopropanol, n-Butanol, Diacetonalkohol oder deren Mischungen gelöst werden, UV-Absorber und Lichtschutzmittel und gegebenenfalls übliche Hilfsstoffe zugesetzt und ebenfalls gelöst bzw. dispergiert werden. Das erhaltene, gebrauchsfertige Grundiermittel hat einen Festkörpergehalt von etwa 1 bis 30 Gew.-%, vorzugsweise 15 bis 25 Gew.-%. Das Grundiermittel wird durch übliche Methoden, wie durch Tauchen, Spritzen, Gießen, Rakeln, Walzen, auf die Kunststofformkörperoberfläche in gewüschter Schichtdicke appliziert und bei Temperaturen von ca. 90 bis 180° C, vorzugsweise 100 bis 130° C innerhalb von 10-60 Minuten eingebrannt. Es ist auch möglich, das Grundiermittel aus wäßriger Dispersion, die noch organische Lösungsmittel enthalten kann, zu applizieren. Das Aushärten der Grundierschicht kann auch mit Hilfe energiereicher Strahlung, z.B. durch Elektronenbestrahlung, vorgenommen werden.

Die zweite Schicht des Überzugs wird durch Einbrennen eines Gemisches aus einem thermoplastischen Acrylharz, einem aliphatischen oder cycloaliphatischen verkappten Polyisocyanat und einem Weichmacher hergestellt. Vorzugsweise enthält diese Schicht keine UV-Absorber und/ oder Lichtschutzmittel und keine üblichen Hilfsstoffe. Für den Fall, daß UV-Absorber, Lichtschutzmittel und übliche Hilfsstoffe eingesetzt werden sollen, kommen die gleichen Zusätze wie für die Grundierschicht und in etwa den gleichen Mengen in Frage. Als Katalysatoren werden dann außer den für die Herstellung der Grundierschicht genannten Katalysatoren beispielsweise tert. aliphatische Amine, Salze der tert. aliphatischen Amine mit organischen Säuren, Dibutylzinn-dicarboxylat eingesetzt, obwohl bevorzugt für die Herstellung der zweiten Überzugsschicht keine Katalysatoren verwendet werden.

Die Herstellung des Überzugsmittels für die zweite Überzugsschicht erfolgt analog der des Grundiermittels bzw. das Applizieren und das Einbrennen unter den gleichen Bedingungen, wie für die Grundierschicht angegeben ist. Der Festkörpergehalt des gebrauchsfertigen Überzugsmittels für die zweite Schicht beträgt 1 bis 10 Gew.-%, vorzugsweise 3 bis 6 Gew.-%.

Das in der zweiten Überzugsschicht enthaltene thermoplastische Acrylharz kann ein Polymerisat sein mit polymerisierten Einheiten von
I. 100 bis 20 Gew.-% eines
(Meth)Acrylsäurealkylesters mit 1 bis 12 C-Atomen in der Alkoholkomponente, vorzugsweise Methylmethacrylat, und
II. 0 bis 80 Gew.-% mindestens eines, von I verschiedenen (Meth)Acrylsäurealkylesters mit 1 bis 12 C-Atomen in der Alkoholkomponente, vorzugsweise n-Butyl- oder 2-Ethylhexylacrylat oder deren Mischungen, und gegebenenfalls
III. bis zu 30 Gew.-% Styrol, durch $C_1$-$C_4$-Alkyl in der Vinylgruppe und/oder im Benzolkern substituiertes Styrol, Vinylacetat, (Meth)-Acrylamid, (Meth)Acrylsäure, Acrylnitril oder deren Mischungen [(Meth)Acrylamid und (Meth)Acrylsäure nur bis zu 5 Gew.-%], die Summe der Prozentgehalte beträgt 100.

Die thermoplastischen Acrylharze sind bekannt bzw. werden nach bekannten Methoden hergestellt (vgl. US-PS 3 594 264, 4 224 378, 3 674 734, 2 934 509, GB-PS 618 691, DE-OS 19 18 893, DE-AS 15 69 040, Houben-Weyl, Methoden der Organischen Chemie, 1962, Georg Thieme Verlag, Stuttgart, Bd. XIV/1, Seite 1033 bis 1072). Die Molgewichte Mn der thermoplastischen Acrylharze, gemessen durch Gelpermeationschromatographie liegen vorzugsweise zwischen 5000 und 100000, insbesondere zwischen 10000 und 40000.

Bevorzugt sind thermoplastische Acrylharze aus den Komponenten I und II.

Die für die Herstellung der zweiten Überzugsschicht einzusetzenden verkappten Polyisocyanate leiten sich von Lackpolyisocyanaten ab, d.h. von insbesondere Biuret-, Urethan- oder Isocyanuratgruppen aufweisenden Polyisocyanaten einer über 2, vorzugsweise zwischen 2,5 und 6 liegenden mittleren NCO-Funktionalität. Diese Polyisocyanate weisen aromatisch, cycloaliphatisch oder aliphatisch gebundene Isocyanatgruppen auf. Für lichtechte Beschichtungen werden Polyisocyanate mit aliphatisch und/oder cycloaliphatisch gebundenen Isocyanatgruppen bevorzugt. Sie besitzen im allgemeinen einen NCO-Gehalt von 10 bis 30 Gew.-%, bezogen auf Feststoff.

Geeignete Diisocyanate zur Herstellung der Lackpolyisocyanate sind beispielweise 2,4- und/oder 2,6-Diiso-cyanatotoluol, 2,4'-Diisocyanato-dicyclohexylmethan, 4,4'-Diisocyanato-dicyclohexylmethan, Hexamethylendiisocyanat oder 1-Isocyanato-3,3,5-trimethyl-5-iso-cyanatomethyl-cyclohexan (IPDI). Hexamethylendiisocyanat und IPDI stellen die bevorzugten Diisocyanate dar. Die Herstellung der Lackpolyisocyanate aus den beispielhaft genannten Ausgangsdiisocyanaten erfolgt nach bekannten Methoden des Standes der Technik. So kann beispielsweise die Herstellung der Biuretgruppen aufweisenden Lackpolyisocyanate nach dem Verfahren der US-Patentschrift 3 124 605, 3 358 010, 3 903 126, 3 903 127 oder 3 976 622 erfolgen. Die Herstellung von erfindungsgemäß einsetzbaren Urethanpolyisocyanaten geschieht beispielsweise gemäß US-PS 3 183 112, während die Herstellung von Isocyanuratgruppen aufweisenden, erfindungsgemäß geeigneten Lackpolyisocyanaten, beispielsweise nach den Verfahren der GB-Patentschriften 1 060 430, 1 234 972, 1 506 373, 1 166 316 oder 1 458 564 bzw. gemäß den US-Patentschriften 3 394 111, 3 645 979 oder 3 919 218 erfolgt.

Zu den besonders bevorzugten Lackpolyisocyanaten gehören die Biuretgruppen aufweisenden Polyisocyanate gemäß US-PS 3 124 605, insbesondere jene auf Basis von Hexamethylendiisocyanat, sowie die bekannten Isocyanuratgruppen aufweisenden Polyisocyanate von Hexamethylendiisocyanat, IPDI oder von Gemischen von Hexamethylendiisocyanat Mit IPDI gemäß US-PS 3 919 218.

Als Verkappungsmittel (Blockierungsmittel) für die polyisocyanate kommen vorzugsweise Phenole, ε-Caprolactam, Imidazoline, insbesondere Malonsäurediethylester und/oder Acetessigsäureethylester in Frage. Diese und weitere Verkappungsmittel sind in High polymers, Vol. XVI, Part. I, Polyurethanes, Chemistry and Technology, Seite 120, von J.H. Saunders und K.C. Frisch, Interscience publishers (1962) und in der Europäischen Patentschrift No. 0001467 beschrieben.

Als Weichmacher sind in der zweiten Überzugsschicht vorzugsweise Alkylsulfonsäureester des Phenols und/oder Kresols mit durchschnittlich 10 bis 18 C-Atomen in der Alkylgruppe enthalten.

Ferner kommen in Frage: Phthalsäuredialkylester mit 1 bis 6 C-Atomen in jeder Alkylgruppe, Adipinsäuredialkylester mit 2 bis 6 C-Atomen in jeder Alkylgruppe, Chlorparaffine, Phosphorsäureester wie Diphenylkresylphosphat, Diphenylxylenylphosphat, Diphenyloctylphosphat, Trioctylphosphat, Trikresylphosphat, Triphenylphosphat, Trichlorethylphosphat usw.

Das Bindemittel für die zweite Überzugsschicht besteht aus 20 bis 60 Gew.-% thermoplastischem Acrylharz, 20 bis 60 Gew.-% verkapptem Polyisocyanat und 20 bis 60 Gew.-% Weichmacher, bezogen auf Bindemittel. Auch im eingebrannten Überzug sind die angegebenen Komponenten bzw. deren Umwandlungsprodukte in etwa dem gleichen Verhältnis enthalten, abzüglich des Anteils an Verkappungsmitteln, sofern diese nicht in das Polymere eingebaut werden.

Die dritte Schicht des Überzugs (Deckschicht) wird durch Einbrennen eines Bindemittelgemisches aus mindestens einem teilhydrolysierten Organosiloxan, einem α,ω-Dihydroxy-polydimethyl-siloxan, einem Kieselsäuresol und mindestens einem verkappten Polyisocyanat in Gegenwart einer wasserlöslichen organischen oder anorganischen Säure wie Ameisensäure, Essigsäure, Propionsäure, Salzsäure gebildet und enthält mindestens einen UV-Absorber. Falls noch Lichtschutzmittel in der Deckschicht vorhanden sein sollen, kommen die gleichen Mittel wie für die Grundierschicht in Frage. Katalysatoren werden bei der Herstellung der dritten Schicht vorzugsweise nicht verwendet. Falls Katalysatoren erwünscht sind, können die gleichen eingesetzt werden, die für die zweite Überzugsschicht genannt wurden. Als weitere Hilfsstoffe bei der Herstellung der Deckschicht können Verlaufsmittel, Entlüftungsmittel, Lösungsvermittler, Mattierungsmittel, Glanzverbesserer, Antioxidantien, Hitzestabilisatoren usw. in üblichen Mengen verwendet werden.

Das Herstellen des Überzugsmittels für die Deckschicht kann in der Weise erfolgen, daß zu einer Mischung aus dem Kieselsäuresol, Essigsäure, Wasser und vorzugsweise wassermischbarem organischen Lösungsmittel die Organosilane und das α,ω-Dihydroxy-polydimethyl-siloxan in etwa dem gleichen Verhältnis enthalten, abzuglich des Anteils an Verkappungsmitteln, sofern diese nicht in das Polymere eingebaut werden.

Die dritte Schicht des Überzugs (Deckschicht) wird durch Einbrennen eines Bindemittelgemisches aus mindestens einem teilhydrolysierten Organosiloxan, einem α,ω-Dihydroxy-polydimethyl-siloxan, einem Kieselsäuresol und mindestens einem verkappten Polyisocyanat in Gegenwart einer wasserlöslichen organischen oder anorganischen Säure wie Ameisensäure, Essigsäure, Propionsäure, Salzsäure gebildet und enthält mindestens einen UV-Absorber. Falls noch Lichtschutzmittel in der Deckschicht vorhanden sein sollen, kommen die gleichen Mittel wie für die Grundierschicht in Frage. Katalysatoren werden bei der Herstellung der dritten Schicht vorzugsweise nicht verwendet. Falls Katalysatoren erwünscht sind, können die gleichen eingesetzt werden, die für die zweite Überzugsschicht genannt wurden. Als weitere Hilfsstoffe bei der Herstellung der Deckschicht können Verlaufsmittel, Entlüftungsmittel, Lösungsvermittler, Mattierungsmittel, Glanzverbesserer, Antioxidantien, Hitzestabilisatoren usw. in üblichen Mengen verwendet werden.

Das Herstellen des Überzugsmittels für die Deckschicht kann in der Weise erfolgen, daß zu einer Mischung aus dem Kieselsäuresol, Essigsäure, Wasser und vorzugsweise wassermischbarem organischen Lösungsmittel die Organosilane und das α,ω-Dihydroxy-polydimethyl-siloxan ( = Hilfsmittel zur Beeinflussung der Härte und Oberflächenglätte) unter Rühren zugegeben werden, die Mischung 1 bis 12 Stunden auf 50 bis 80°C erhitzt wird, wobei die Organosilane teilhydrolysiert werden. Es ist jedoch auch ohne weiteres möglich, zunächst die Organosilane teilweise zu hydrolysieren und anschließend das Kieselsäuresol und das α,ω-

Dihydroxy-polydimethylsiloxan zuzusetzen. Nach dem Abkühlen werden eine organische Lösung oder wäßrige Dispersion des verkappten Polyisocyanats, die noch Hilfsmittel wie Lösungsvermittler usw. enthalten kann, ferner UV-Absorber und gegebenenfalls weitere Hilfsmittel zugesetzt und gelöst bzw. dispergiert.

Das erhaltene gebrauchsfertige Überzugsmittel ( = wäßrige, organische Lösungsmittel enthaltende Dispersion) für die Deckschicht hat einen Festkörpergehalt von etwa 15 bis 30 Gew.-%. Das Bindemittelgemisch (100 %ig) besteht vorzugsweise aus 56 bis 85 Gew.-% teilhydrolysierten Organosilanen; 0,02 bis 4,5 Gew.-% α,ω-Dihydroxypolydimethylsiloxan (100 %ig), 5 bis 35 Gew.-% kolloidaler Kieselsäure (100 %ig) und 0,5 bis 4,5 Gew.-% verkapptem Polyisocyanat.

Als Organosilane, die durch Hydrolyse in Wasser bei 50 bis 80°C in Gegenwart einer wasserlöslichen organischen oder anorganischen Säure während etwa 1 bis 12 Stunden mindestens teilhydrolysiert werden können, kommen z.B. in Frage:

a) Kohlenwasserstoff-trialkoxysilane der Formel R'Si(OR")$_3$, worin R' eine Alkylgruppe mit 1-4 Kohlenstoffatomen, eine Phenyl- oder Vinylgruppe und R" eine Alkylgruppe mit 1-4 Kohlenstoffatomen bedeuten, und/oder

b) Co-Kondensationsprodukte von a) und, bezogen auf a), 1 bis 40 Gew.-% eines Phenyl- oder Vinyltrialkoxysilans, worin die Alkoxygruppe 1 bis 4 Kohlenstoffatome enthält, und/oder

c) Co-Kondensationsprodukte von 1 Mol von a) und 0,01 bis 0,5 Mol, vorzugsweise 0,05 bis 0,2 Mol Tetraalkoxysilan, worin die Alkoxygruppe 1 bis 4 Kohlenstoffatome enthält.

Besonders bevorzugt sind die Co-Kondensationsprodukte c) aus den spezifizierten Alkyl-trialkoxysilanen unter a), insbesondere Methyltriethoxysilan, und den genannten Tetraalkoxysilanen, insbesondere Tetraethoxysilan.

Die Herstellung solcher Teilhydrolysate ist an sich bekannt und beispielsweise in der US-Patentschrift 3 451 838, DE-OS 1 923 290 und in der US-PS 4 006 271 beschrieben.

Die endständige Hydroxygruppen enthaltenden Polysiloxane ( = α,ω -Dihydroxy-polydimethyl-siloxane) sind an sich bekannte, niedrigviskose und wasserklare Flüssigkeiten, die in den betreffenden wäßrig-alkoholischen Lösungen oder Zubereitungen löslich sind. Die Kettenlänge der Siloxankette soll etwa 1 bis 25, bevorzugt 2 bis 20, besonders bevorzugt 4 bis 15 betragen; Materialien dieser Art weisen bevorzugt ein mittleres Molgewicht von etwa 150 bis 1800 auf. Als Substituenten am Si-Atom kommt bevorzugt Methyl in Frage.

Die zugesetzte kolloidale Kieselsäure ist im Bindemittelgemisch in Form eines 20 bis 35 gew.-%igen Kieselsäuresols enthalten mit einer spezifischen Oberfläche von etwa 50 bis 600 m$^2$/g, vorzugsweise 200 bis 400 m$^2$/g, gemessen nach der BET-Methode.

Als verkappte Polyisocyanate kommen die gleichen in Frage, die im Bindemittel für die zweite Überzugsschicht vorhanden sind. Auch hier sind verkappte Polyisocyanate auf Basis von Hexamethylendiisocyanat und/ oder IPDI besonders bevorzugt.

Erfindungsgemäß einzusetzende Bindemittel für die Deckschicht ( = dritte Überzugsschicht) sind in der deutschen Patentanmeldung P 31 35 184.0 vorgeschlagen worden.

Wie bereits erwähnt, kommen als UV-Absorber die gleichen Verbindungen wie für die Grundierschicht genannt, in Frage. Besonders bevorzugt wird für die dritte Schicht der Klasse der Benzophenon-Typ-UV-Absorber, insbesondere 2-Hydroxy-4-methoxy-benzophenon.

Als organische Lösungsmittel, die zur Herstellung des Überzugsmittels für die Deckschicht verwendet werden, kommen beispielsweise Alkohole, Ketone, Ether, Glykolether, Glykoletherester und/oder aromatische Kohlenwasserstoffe in Betracht. Zur Herstellung des Überzugsmittels sind von diesen Lösungsmitteln Ethylglykol, Ethanol und Isopropano; besonders bevorzugt. Die Menge an organischen Lösungsmitteln muß ausreichen, um die teilweise hydrolysierte Verbindung zusammen mit der Säure und den übrigen erwähnten Zusatzmitteln vollständig zu lösen und um die Konzentration an der teilweise hydrolysierten Verbindung auf 5 bis 15 Gew.-%, berechnet als Feststoffe und bezogen auf das Gesamtgewicht des Überzugsmittels, für die Deckschicht einzustellen.

In der eingebrannten Deckschicht sind die Komponenten des Bindemittels bzw. ihrer Folgeprodukte und des UV-Absorbers in folgenden Verhältnissen vorhanden:

$SiO_2$- und R $SiO_{3/2}$-Einheiten, herrührend aus den hydrolysierten Silanen, $\alpha$, $\omega$-Dihydroxy-polydimethylsiloxan und Kieselsäuresol 90,8 bis 98 Gew.-%; Polyisocyanatfolgeprodukt 0,15 bis 1,2 Gew.-% und UV-Absorber 0,5·bis 8 Gew.-%.

Falls noch Lichtschutzmittel in der eingebrannten Deckschicht vorhanden sind, besteht die Deckschicht aus 87,8 bis 98 Gew.-% $SiO_2$- und R $SiO_{3/2}$-Einheiten, 0,15 bis 1,2 Gew.-% Polyisocyanatfolgeprodukt, 0,5 bis 8 Gew.-% UV-Absorber und 0,1 bis 3 Gew.-% Lichtschutzmittel.

Die in der Beschreibung und den Beispielen angegebenen Teile und Prozentgehalte, soweit noch nicht angegeben, beziehen sie sich auf das Gewicht.

Experimenteller Teil
Herstellung bzw. Beschreibung der Ausgangsmaterialien

A. Das im Beispiel 1 gemäß Erfindung und in den Vergleichsbeispielen (Tabelle II) für die Herstellung der Grundierschicht eingesetzte härtbare Acrylharz (A) ist ein handelsübliches Produkt und stellt ein Copolymerisat aus copolymerisierten Einheiten von

15 Gew.-% Methacrylsäure-2-hydroxyethylester,
62 Gew.-% Methylmethacrylat,
5 Gew.-% Ethylacrylat und
17 Gew.-% 2-Ethylhexylacrylat

dar. Das durchschnittliche Molekulargewicht $M_n$ beträgt 7000, gemessen durch Gelpermeationschromatographie.

B. Das im Beispiel 1 gemäß Erfindung und in den Vergleichsversuchen (Tabelle II) für die Herstellung der zweiten Überzugsschicht verwendete thermoplastische Acrylharz (B) ist ein handelsübliches Produkt und stellt ein Copolymerisat aus copolymerisierten Einheiten von

80 Gew.-% Methylmethacrylat und
20 Gew.-% n-Butylacrylat

dar und besitzt ein durchschnittliches Molekulargewicht $M_n$ von ca. 19000, gemessen durch Gelpermeationschromatographie.

C. Das im Beispiel 1 gemäß Erfindung verwendete Aminoplastharz ist Hexamethoxymethylmelamin.

D. Das im Beispiel 1 gemäß Erfindung verkappte Polyisocyanat (D) ist ein handelsübliches Produkt, und zwar trimerisiertes 1,6-Hexandiisocyanat ( = Isocyanatopolyisocyanurat, durchschnittliches Molekulargewicht 1200), dessen freie Isocyanatgruppen (ca. 20 Gew.-%) mit einem Gemisch aus Malonsäurediethylester/Acetessigsäureethylester (Molverhältnis 1:1) verkappt sind. Das verkappte Polyisocyanat (D) wird als 75 gew.-%ige Lösung in Ethylglykolacetat/Xylol (Gewichtsverhältnis 1:1) eingesetzt.

E. Das im Beispiel 1 gemäß Erfindung verkappte Polyisocyanat (E) ist ein handelsübliches Produkt und stellt im wesentlichen N', N'', N''-Tris-(6-iso-cyanatohexyl)-biuret dar, dessen freie Isocyanatgruppen zu etwa 82 % mit Malonsäurediethylester verkappt sind. Die restlichen NCO-Gruppen sind mit Natrium-2,4-diaminobenzolsulfonat umgesetzt. Polyisocyanurat (E) wird als 75 %ige Lösung in Isopropanol eingesetzt. Der Lösung werden noch - bezogen auf Gesamtfeststoff der Lösung-5 Gew.-% eines polyoxethylierten n-Butanols (Molgewicht ca. 2000), als Lösungsmittelvermittler (Hilfsmittel) zugesetzt.

Das Endprodukt enthält keine freien Isocyanatgruppen.

Anstelle des Natrium-2,4-diaminobenzolsulfonats kann auch die äquivalente Menge an 2-(2-Amino-ethylamino)-ethansulfonsäure (Na-Salz) eingesetzt werden.

F. Das im Beispiel 1 der Erfindung und in den Vergleichsversuchen (Tabelle II) teilhydrolysierte Organosilan wird wie folgt hergestellt:

Zu 300 g Kieselsäuresol mit 30 Gew.-% $SiO_2$-Gehalt und einer spezifischen Oberfläche von 300 $m^2$/g werden 19,8 g Eisessig, 210 g destilliertes Wasser und 227 g Isopropanol gegeben. Nach gründlicher Durchmischung wird eine Mischung aus 900 g Methyltriethoxysilan, 30 g Tetraethoxysilan und 1,5 g hydroxylgruppenterminiertes Polydimethylsiloxan mit einer durchschnittlichen Kettenlänge von 5,5 zugesetzt und die Gesamtmischung unter Rühren auf 60°C erwärmt. Man beläßt während 4 Std. bei dieser Temperatur und fügt anschließend weitere 1200 g Isopropanol zur Mischung hinzu. Nach Abkühlen des Produktes auf Raumtemperatur wird die schwach opake Lösung filtriert. Die Lösung enthält ein Teilhydrolysat von Tetraethoxysilan (0,67 %, berechnet als $SiO_2$) und ein Teilhydrolysat von Methyltriethoxysilan (11,73 %, berechnet als $CH_3SiO_{1,5}$).

G. Grundiermittel-gemäß Erfindung

Eine Lösung des härtbaren Acrylharzes (A) wird mit Hexamethoxymethylmelamin vermischt und in die erhaltene Lösung p-Toluolsulfonsäure, 2-(2'-Hydroxy-3',5'-diamyl-phenyl)-benztriazol (UV-Absorber) und Bis-(1,2,2,6,6-pentamethyl-piperidyl-4)-sebacat (Lichtschutzmittel) eingetragen und unter Rühren gelöst. Das Grundiermittel hat folgende prozentuale Zusammensetzung:

15,4 Gew.-% Copolymerisat (A), gelöst 51 %ig in einem Xylol/Ethylglykolacet-Gemisch (Gewichtsverhältnis 1:1)
15,4 Gew.-% Hexamethoxymethylmelamin (100 %ig)
1,4 Gew.-% p-Toluolsulfonsäure (40 %ig in Isopropanol)
27,2 Gew.-% Methylethylketon
27,2 Gew.-% Iso-propanol
6,1 Gew.-% Diacetonalkohol
7,0 Gew.-% UV-Absorber
0,3 Gew.-% Lichtschutzmittel
Summe 100,0 Gew.-%
Der Festkörpergehalt des Grundiermittels beträgt 25 Gew.-%.

Überzugsmittel (Z) (Z = zweite Schicht)

Das thermoplastische Acrylharz (B) wird in einem Lösungsmittelgemisch (V) aus Methylethylketon (45 %)/Iso-propanol (45 %)/Diacetonalkohol (10 %) gelöst, dann mit dem Weichmacher, Alkylsulfonsäurephenylester mit durchschnittlich 15 C-Atomen in der Alkylgruppe und anschließend mit dem verkappten Polyisocyanat (D) (75 %ige Lösung) vermischt.

Das Überzugsmittel (Z) hat folgende prozentuale Zusammensetzung:

1,34 Gew.-% thermoplastisches Acrylharz (B)
1,3 Gew.-% Weichmacher
1,8 Gew.-% verkapptes Polyisocyanat (D) (75 %ige Lösung)
9-5,56 Gew.-% Lösungsmittelgemisch (V)
Summe 100,00 Gew.-%
Der Festkörpergehalt des Überzugsmittels (Z) beträgt ca. 4 Gew.-%.

Überzugsmittel (D) (D = Deckschicht)

Das teilhydrolysierte Organosilan gemäß (F) wird unter Rühren mit dem verkappten Polyisocyanat (E) und dem UV-Absorber, 2-Hydroxy-4-methoxy-benzo-phenon, vermischt. Das Überzugsmittel (D) hat folgende prozentuale Zusammensetzung:

3,46 Gew.-% kolloidale Kieselsäure ($SiO_2$)

0,67 Gew.-% Hydrolysat von Tetraethoxysilan
11,73 Gew.-% Hydrolysat von Methyltriethoxysilan
0,05 Gew.-% durch Hydroxylgruppen terminiertes Polydimethylsiloxan
24,89 Gew.-% $H_2O$
49,405 Gew.-% Isopropanol
0,69 Gew.-% Essigsäure (100 %ig)
0,08 Gew.-% verkapptes Polyisocyanat (E) (75 %ig)
0,005 Gew.-% polyoxethyliertes Butanol (100 %ig)
0,02 Gew.-% Natrium-2,4-diaminobenzolsulfonat (100 %ig)
4 Gew.-% UV-Absorber
Der Festkörpergehalt des Überzugsmittels (D) beträgt 16,01 Gew.-% (ohne Essigsäure).

**Beispiele1**

**Beispiel 1 (gemäß Erfindung)**

3 mm dicke Platten (12 x 5 cm) aus handelsüblichem Polycarbonat (PC) auf Basis von Bisphenol A (rel. 1.31) werden mit Isopropanol oder fluorierten Kohlenwasserstoffen gereinigt.

a) Mittels Tauchen (Tauchgeschwindigkeit v = 100 cm. $min^{d-1}$) wird die PC-Platte in das Grundiermittel gemäß (G) bei Raumtemperatur t = ca. 23°C an der Oberfläche mit einer ca. 25000 nm dicken Grundierung versehen und die Grundierschicht nach 10 min. Ablüften bei Raumtemperatur 30 min. bei 120°C eingebrannt. Die eingebrannte Grundierschicht hat eine Dicke von ca. 5000 nm.

b) Auf die Oberfläche der grundierten PC-Platte wird bei Raumtemperatur durch Tauchen in das Überzugsmittel (Z) Tauchgeschwindigkeit v = 100 cm - $min^{-1}$) eine zweite Schicht in einer Dicke von ca. 12000 nm appliziert. Nach 5 min. Ablüften bei Raumtemperatur wird 15 min. bei 120°C eingebrannt. Die eingebrannte zweite Schicht hat eine Dicke von ca. 500 nm.

c) Die gemäß b) ausgerüstete PC-Platte wird bei Raumtemperatur durch Tauchen in das Überzugsmittel (D) (Tauchgeschwindigkeit v = 40 cm. $min^{-1}$) mit einer Deckschicht von ca. 25000 nm Dicke versehen. Nach 10 min. Ablüften bei einer relativen Luftfeuchtigkeit von < 40 % und Raumtemperatur wird 60 min. bei 120°C eingebrannt. Die eingebrannte Deckschicht ist ca. 6000 nm dick.

Die beschichteten Platten werden nach erfolgter Aushärtung 2 Tage bei Raumtemperatur gelagert und sodann folgenden Prüfungen unterworfen. Die Ergebnisse der Prüfungen sind aus Tabelle I ersichtlich.

1. Haftfestigkeit auf dem Trägermaterial

Gemäß DIN 53 151 wird auf die Platte aufgebrachte ausgehärtete Schicht bis zum Substrat mit einer scharfen Klinge kreuzweise eingekerbt, so daß 100 Quadrate mit einer Fläche von 1 mm² gebildet werden. Die Prüfung nach DIN 53 151 wird dann dadurch verschärft, daß ein Cellophanklebeband fest auf die kreuzweise eingeschnittenen Linien aufgeklebt und mit einem 90°-Winkel zur aufgetragenen Schicht abgezogen wird. Das Verfahren wird drei mal wiederholt. Die erhaltenen Haftungswerte werden in Klassen eingeteilt von 0 (keine Entlaminierung) bis 4 (vollständige Entlaminierung), abhängig von der Zahl der zurückbleibenden Zellen.

2. Kratzbeständigkeit (Stahlwolle-Abriebversuch)

Die beschichtete Oberfläche der Platten wird mit einer Stahlwolleprobe der Feinheit 0000 gerieben. Die Ergebnisse werden entsprechend den folgenden Kategorien bewertet, abhängig von dem Ausmaß, in dem die Oberfläche verkratzt war.

A = keine Kratzer,
B = leicht verkratzt,
C = stark verkratzt.

3. Bewitterung

Die künstliche Bewitterung erfolgt im Weatherometer der Firma Hareus, Hanau, Gerätetyp Xeno-Test 1200. Mit einem UV-Spezialfilter wird der kurzweiligere Strahlungsanteil bis < 280 nm herausgefiltert. Die Proben werden in Intervallen von jeweils 36 sec. der Bestrahlung bzw. der Dunkelheit ausgesetzt. Gleichzeitig werden die Proben in Intervallen von 3 min. einer Besprühung durch Wasser unterworfen und 17 min. nicht besprüht. Nach jeweils 250 Std. Bewitterung werden die Proben auf Haftfestigkeit, Kratzbeständigkeit der Beschichtung sowie Vergilbung und Abbau des Substrats geprüft.

4. Vergilbung

Die Vergilbung wird in Anlehnung an DIN 53230 durch visuellen Vergleich der nicht bewitterten probekörper und der bewitterten Probekörper festgestellt.

Dabei bedeuten in der nachfolgenden Skala:
0 klar, keine Vergilbung
1 Spur Vergilbung
2 leichte Vergilbung
3 stärkere Vergilbung
4 starke Vergilbung
5 sehr starke Vergilbung.

5. Abbau

Der Abbau wird in Anlehnung an DIN 53230 gemessen.

Es bedeuten:
0 keinerlei Abbau
1 leichte Fleckenbildung, noch transparent
2 Fleckenbildung, leicht opak
3 Oberfläche leicht eingetrübt
4 Oberfläche trübe, geringer weißer Belag
5 Oberfläche trübe, starker grau-weißer Belag.

## Tabelle I

| PC-Platte | Haftung Gitter- schnitt | Kratz- festig- keit Stahl- wolle | Vergilbung | Abbau |
|---|---|---|---|---|
| | (Test 1) | (Test 2) | DIN 53230 | DIN 53230 |
| a) nicht beschichtet (Vergleich 1) | - | C | 0 | 0 |
| b) nicht beschichtet (Vergleich 2) nach 250 Std. Bewitterung | - | C | 5 | 4 |
| c) beschichtet gemäß (Erfindung) Beispiel 1a + 1b + 1c | 0 | A | 0 | 0 |
| d) beschichtet gemäß (Erfindung) Beispiel 1a + 1b + 1c und 2000 Std. bewittert | 0 | A | 0 | 0-1 |

0 092 609

Wie aus Tabelle I ersichtlich, weisen die Oberflächen von Polycarbonatformkörpern, die erfindungsgemäß mit einem Dreischichtüberzug versehen worden sind, gute Haftung und Kratzfestigkeit auf, und auch das Polycarbonat selbst zeigt keine Vergilbung und keinen Abbau.

Praktisch die gleichen Ergebnisse werden auch nach einer Bewitterung von 2000 Std. festgestellt.

Im übrigen werden auch an Polymethylmethacrylatformkörpern, Polyamid- und Polyesterformkörpern nach der erfindungsgemäßen Ausrüstung ähnlich gute Ergebnisse erhalten.

In der nachfolgenden Tabelle II sind Ergebnisse zusammengestellt, die am Polycarbonatformkörper festgestellt wurden, wenn nur mit dem Grundiermittel (Vergleich 1a) oder nur mit dem Überzugsmittel für die zweite Schicht (Vergleich 1b) oder nur mit dem Überzugsmittel für die Deckschicht (Vergleich 1c) beschichtet wurde. Auch die Kombinationen 1a + 1c bzw. 1b + 1c bzw. 1a + 1c zeigen nach 2000 Std. Bewitterung ungenügende Haftung und Kratzfestigkeit des Überzugs bzw. unerwünschte Vergilbung und Abbau des Polycarbonats.

Tabelle II

| PC-Platte, ausgerüstet gemäß | Haftung nach Test 1 | Kratzfestigkeit nach Test 2 | Vergilbung DIN 53230 | Abbau DIN 53230 |
|---|---|---|---|---|
| 1a Vergleich (nicht bewittert) | 0 | C | 0 | 0 |
| 1a Vergleich (nach 2000 h Bewitterung) | 1 | C | 0 | 0-1 |
| 1b Vergleich (nicht bewittert) | 0 | C | 0 | 0 |
| 1b Vergleich (nach 2000 h Bewitterung) | 4 | C | 5 | 5 |
| 1c Vergleich (nicht bewittert) | 0 | A | 0 | 0 |
| 1c Vergleich (nach 2000 h Bewitterung) | 4 | C (Haftverlust) | 5 | 5 |
| 1a + 1c Vergleich (nicht bewittert) | beim Einbrennen des Decklackes tritt Rißbildung in der Deckschicht ein, keine weiteren Tests | | | |
| 1b + 1c Vergleich (nicht bewittert) | 0 | A | 0 | 0 |

0 092 609

## Tabelle II (Fortsetzung)

| PC-Platte, ausgerüstet gemäß | Haftung nach Test 1 | Kratzfestigkeit nach Test 2 | Vergilbung DIN 53230 | Abbau DIN 53230 |
|---|---|---|---|---|
| 1b + 1c Vergleich (nach 2000 h Bewitterung) | 4 | C | 4 | 4 |
| 1a + 1b Vergleich (nicht bewittert) | 0 | C | 0 | 0 |
| 1a + 1b Vergleich (nach 2000 h Bewitterung) | 1 | C | 0 | 0-1 |
| 1a + 1b + 1c Erfindung (nach 2000 h Bweitterung) | 0 | A | 0 | 0-1 |

0 092 609

Vergleichsversuch 1 Gegenüber der US-PS 4 224 378

Beispiel 2 der US-Patentschrift wird exakt wiederholt, wonach ein mit Polymethylmethacrylat grundiertes Polycarbonat erhalten wird. Die Schichtdicke der eingebrannten Grundierung betrug ca. 500 nm. Ebenso wurde gemäß Beispiel 3 der US-Patentschrift ein mit Polymethylmethacrylat grundiertes Polycarbonat mit einer Grundierungsschichtdicke von ca. 11500 nm erhalten. Die Grundierschichten enthielten noch 30 Gew.-%, bezogen auf Feststoff der Grundierung, an 2-(2'-Hydroxy-3',5'-diamyl-phenyl)-benztriazol (UV-Absorber), wie das Grundiermittel gemäß vorliegender Erfindung.

Gemäß Beispiel 4 der US-Patentschrift wurden PC-Platten, erhalten nach den Beispielen 2 bzw. 3 Plus UV-Absorber, mit dem angegebenen Organopolysiloxan beschichte; 30 min. an der Luft getrocknet und 1 Std. bei 125°C gehärtet. Die Dicke der eingebrannten Deckschicht betrug jeweils ca. 6000 nm.

Die Probe aus Beispiel 2 und 4 (Grundierung ca. 500 nm, Deckschicht ca. 6000 nm) wird als Prüfkörper A, die Probe aus Beispiel 3 und 4 (Grundierung ca. 11500 nm, Deckschicht ca. 6000 nm) als Prüfkörper B bezeichnet. Die Prüfkörper wurden auf Haftung, auf Kratzfestigkeit bzw. Rißbildung des Überzugs und Vergilbung bzw. Abbau des Polycarbonats geprüft. Die Ergebnisse sind aus Tabelle III ersichtlich.

## Tabelle III

| PC-Platte | Haftung | Kratzfestigkeit | Vergilbung | Abbau |
|---|---|---|---|---|
| Prüfkörper A nicht bewittert | 0 | A | 0 | 0 |
| Prüfkörper A ca. 1000 Std. bewittert | 4 | C | 4-5 | 4-5 |
| Prüfkörper B nicht bewittert | Bereits nach dem Einbrennen weist die eingebrannte Deckschicht eine starke Rißbildung auf, so daß keine weiteren Tests durchgeführt wurden. | | | |

0 092 609

Vergleichsversuch 2 gegenüber US-PS 3 707 397

3 mm dicke Polycarbonatplatten (10 x 5 cm) wurden gemäß Beispiel 1-B der US-Patentschrift mit dem härtbaren Acrylharz beschichtet, so daß einmal nach 30 min. Lufttrocknung eine ca. 250 nm dicke Grundierung bzw. ca. 12500 nm dicke Grundierung erhalten. Im Falle der 12500 nm dicken Grundierung wurde eine Grundiermittellösung mit 40 Gew.-% Feststoffgehalt verwendet. Gemäß Beispiel 1-D wurden die PC-Platten mit der härtbaren Polysiloxanlösung gemäß Beispiel 1-A beschichtet und jeweils 35 min. bei 135°C gehärtet. Die eingebrannte Deckschicht war jeweils ca. 12500 nm dick. Die Proben mit ca. 250 nm Grundierung und 12500 nm Deckschicht werden als Prüfkörper C, die Proben mit einer ca. 12500 nm dicken Grundierschicht und 12500 nm dicken Deckschicht als Prüfkörper D bezeichnet.

Die Prüfkörper wurden auf Haftung, Kratzfestigkeit und Rißbildung des Überzuges und auf Vergilbung und Abbau des Polycarbonats geprüft.

Die Ergebnisse sind aus Tabelle IV ersichtlich.

## Tabelle IV

| PC-Platte | Haftung | Kratzfestigkeit | Vergilbung | Abbau |
|---|---|---|---|---|
| Prüfkörper C, nicht bewittert | 0 | A | 0 | 0 |
| Prüfkörper C, 1000 Std. bewittert | 4 | C | 5 | 5 |
| Prüfkörper D, nicht bewittert | Nach dem Einbrennen der Deckschicht wird eine Rißbildung in der Deckschicht beobachtet. Es erfolgen daher keine weiteren Tests. | | | |

0 092 609

## Patentansprüche

1. Kunststofformkörper, ausgerüstet mit einem Überzug aus drei nacheinander eingebrannten Schichten, dadurch gekennzeichnet, daß die erste, der Oberfläche des Kunststofformkörpers nächstliegende, eingebrannte Schicht aus einem Bindemittelgemisch aus 20-40 Gew.-% härtbaren Acrylharz aus copolymerisierten Einheiten von

A. 50-95 Gew.-% mindestens eines (Meth)Acrylsäurealkylesters mit 1-8 C-Atomen in der Alkoholkomponente und

B. 5-50 Gew.-% mindestens eines weiteren olefinisch ungesättigten Monomeren, das mindestens eine der Gruppen Hydroxy-, Carboxy-,Carbamoyl -($H_2$N-CO-), N-Metylol -carbamoyl-(HO-$CH_2$-NH-CO-), N-Alkoxy-methyl-carbamoyl-(R-O-$CH_2$-NH-CO-, R = $C_1$-$C_4$-Alkyl) oder 1,2-Epoxygruppen enthält und

C. gegebenenfalls bis zu 30 Gew.-% mindestens eines aliphatische oder aromatischen Vinyl- oder Vinylidenmonomeren - die Summe der Gewichtsprozente A+B+C beträgt 100 - und 60 - 80 Gew.-% Aminoplastharz wie eine im Melaminaldehydharz erzeugt worden ist und mindestens 1 bis 100 Gew.-% eines UV-Absorbers wie einer Benzotrialzolverbindung oder eines Benzophenonderivates und mindestens 0.1 bis 5 Gew.-% eines üblichen Lichtschutzmittels enthält, die zweite eingebrannte Schicht aus 20-60 Gew.-% eines thermoplastischen Acrylharzes, das ein polymerisat mit polymerisierten Einheiten von

I. 100 bis 20 Gew.-% eines (Meth)Acrylsäurealkylesters mit 1 bis 12 C-Atomen in der Alkoholkomponente, vorzugsweise Methylmethycrylat, und

II. 0 bis 80 Gew.-% mindestens eines von I verschiedenen (Meth)Acrylsäurealkylesters mit 1 bis 12 C-Atomen in der Alkoholkomponente, vorzugsweise n-Butyl- oder 2-Ethylhexyl-acrylat oder deren Mischungen, und gegebenenfalls

III. bis zu 30 Gew.-% Styrol, durch $C_1$-$C_4$-Alkyl in der Vinylgruppe und/oder im Benzolkern substituiertes Styrol, Vinylacetat, (Meth)Acrylamid, (Meth)-Acrylsäure, Acrylnitril oder deren Mischungen [(Meth)Acrylamid und (Meth)Acrylsäure nur bis zu 5 Gew.-%], die Summe der Prozentgehalte beträgt 100, ist und aus 20-60 Gew.-% eines verkappten Polyisocyanats und 20-60 Gew.-% eines Weichmachers,hergestellt worden ist und die dritte eingebrannte Schicht aus einem Bindemittelgemisch aus 56-85 Gew.-% eines teilhydrolysierten Organosilans, 0.02 bis 4,5 Gew.-% eines α,ω-Dihydroxypolydimethylsiloxans und 0,5 bis 4,3 Gew.-% eines verkappten Polyisocyanats in Gegenwart einer wasserlöslichen, organischen oder anorganischen Säure gebildet worden ist und mindestens einen UV-Absorber enthält.

2. Kunststofformkörper gemäß Anspruch 1, dadurch gekennzeichnet, daß die erste Schicht eine Dicke von 100 bis 30 000 nm, die zweite Schicht eine Dicke von 10 bis 5000 nm, und die dritte Schicht eine Dicke von 1000 bis 30 000 nm besitzt.

Kunststofformkörper gemäß Anspruch 1, dadurch gegennzeichnet, daß der Kunststofformkörper und der eingebrannte Dreischichtenüberzug transparent sind.

4. Verfahren zur Herstellung ewines Überzuges nach Anspruch 1 aus drei Schichten auf einem thermoplastischen Kunststofformkörper dadurch gekennzeichnet, daß mit Hilfe von Überzugsmitteln in organischer Lösung oder wäßriger, organische Lösungsmittel enthaltender Dipersion, enthaltend Bindemittel, UV-Absorber, Lichtschutzmittel und übliche Hilfstoffe die drei Schichten durch Auftragen und Einbrennen der Überzugsmittel in drei aufeinanderfolgenden Arbeitsschritten, aufgebracht werden.

## Claims

1. Plastic moulding, finished with a coating of three successively stoved layers, characterised in that the first stoved layer nearest to the surface of the plastic moulding has been produced from a binder mixture of 20-40% by weight of a hardenable acrylic resin of copolymerised units of

A. 50-95% by weight of at least one (meth)acrylic acid alkyl ester with 1:8 C atoms in the alcohol component and

B. 5:50% by weight of at least one further olefinically unsaturated monomer which contains at least one of the groups comprising hydroxyl, carboxy, carbamoyl, -($H_2$N-CO-), N-methylol-carbamoyl-(HO-$CH_2$-NH-CO-), N-alkoxy-methyl-carbamoyl-(R-O-$CH_2$-NH-CO-, R = $C_1$-$C_4$-alkyl) or 1,2-epoxy groups and

C. optionally up to 30% by weight of at least one aliphatic or aromatic vinyl or vinylidene monomer - the sum of the percentages by weight of A+B+C is 100 - and 60 - 80% by weight of an aminoplastic resin such as a melamine aldehyde resin, and at least 1 to 100% by weight of an UV absorber such as a benzotriazole compound or a benzophenone derivative and at least 0.1 to 5% by weight of a customary light-protecting agent, the second stoved layer has been produced from 20-60% by weight of a thermoplastic acrylic resin, which is a polymer containing polymerised units of

I. 100 to 20% by weight of a (meth)acrylic acid alkyl ester with 1 to 12 C atoms in the alcohol component, preferably methyl methacrylate, and

II. 0 to 80% by weight of at least one (meth)acrylic acid alkyl ester which is different from I and has 1 to 12 C atoms in the alcohol component, preferably n-butylor 2-ethylhexyl acrylate or mixtures thereof, and optionally,

III. up to 30% by weight of styrene, styrene substituted by $C_1$-$C_4$-alkyl in the vinyl group and/or in the benzene nucleus, vinyl acetate, (methlacrylamide, (meth)acrylic acid, acrylonitrile or mixtures thereof [-(meth)acrylamide and (meth)acrylic acid only up to 5% by weight], the sum of the percentages is 100, and of

20-60% by weight of a masked polyisocyanate and 20-60% by weight of a plasticiser, and the third stoved layer has been formed from a binder mixture of 56-85% by weight of a partially hydrolysed organosilane, 0.02 to 4.5% by weight of an α,ω -dihydroxypolydimethylsiloxane and 0.5 to 4.3% by weight of a masked polyisocyanate in the presence of a water-soluble, organic or inorganic acid and contains at least one UV absorber.

2. Plastic moulding according to Claim 1, characterised in that the first layer has a thickness of 100 to 30,000 nm, the second layer has a thickness of 10 to 5,000 nm and the third layer has a thickness of 1,000 to 30 000 nm

3. Plastic moulding according to Claim 1, characterised in that the plastic moulding and the stoved three-layer coating are transparent.

4. Process for producing a coating according to Claim 1 of three layers on a thermoplastic plastic moulding, characterised in that, with the aid of coating compositions in organic solution or aqueous dispersion containing organic solvents, containing binders, UV absorbers, licht-protecting agents and customary auxiliaries, the three layers are applied in three successive working stages by applying and stoving the coating compositions.

## Revendications

1. Objet moulé en matière plastique, muni d'un revêtement de trois couches successivement cuites, caractérisé en ce que la première couche cuite, la plus proche de la surface de l'objet en matière plastique moulé, a été obtenue à partir d'un mélange de liants formé de 20 à 40% en poids d'une résine acrylique durcissable formée de motifs copolymérisés de:

A. 50 à 95% en poids d'au moins un ester alkylique de l'acide (meth)acrylique comportant 1 à 8 atomes de carbone dans le composant alcool, et

B. 5 à 50% en poids d'au moins un autre monomère à insaturation oléfinique, qui contient au moins l'un des groupes hydroxy, carboxy, carbamoyle -($H_2$N-CO), N-méthylol-carbamoyle-(HO-$CH_2$-NH-CO-), N-alcoxyméthyl-carbamoyle (R-O-$CH_2$-NH-CO-, R = alkyle en $C_1$-$C_4$ ou 1,2-époxy et

C. éventuellement jusqu'à 30% en poids d'au moins un monomère vinylique ou vinylidénique, aliphatique ou aromatique - la somme des pourcentages en poids A + B + C représente 100% - et 60 à 80% en poids d'une résine aminoplaste comme une résine mélaminealdéhyde et contient au moins 1 à 100% en poids d'un absorbant de l'ultraviolet tel qu'un composé de benzotriazole ou un dérivé de benzophénone et au moins 0,1 à 5% en poids d'un agent usual de protection contre les effets de la lumière, la seconde couche cuite a été obtenue à partir de 20 à 60% en poids d'une résine acrylique thermoplastique, qui est un polymère comportant des motifs polymérisés de:

I. 100 à 20% en poids d'un ester alkylique de l'acide (meth)acrylique comportant 1 à 12 atomes de carbone dans le composant alcool, avantageusement le méthacrylate de méthyle, et

II. 0 à 80% en poids d'au moins un ester alkylique de l'acide (meth)acrylique, différent de I, comportant 1 à 12 atomes de carbone dans le composant alcool, avantageusement l'acrylate de n-butyle ou l'acrylate de 2-éthylhexyle ou leurs mélanges, et éventuellement

III. jusqu'à 30% en poids de styrène, de styrène substitué dans le groupe vinyle et/ou dans le noyau benzénique par un groupe alkyle en $C_1$-$C_4$, d'acétate de vinyle, de (meth)acrylamide, d'acide (meth)acrylique, d'acrylonitrile ou de leurs mélanges [le (meth)acrylamide et l'acide (meth)acrylique ne représentant que jusqu'à 5% en poids], la somme des teneurs en pourcentage étant de 100%, et

à partir de 20 à 60% en poids d'un polyisocyanate coiffé et de 20 à 60% en poids d'un plastifiant, et la troisième couche cuite a été formée à partir d'un mélange de liants obtenu à partir de 56 à 85% en poids d'un organosilane partiellement hydrolysé, 0,02 à 4,5% en poids d'un α,ω-dihydroxypolydiméthylsiloxane et 0,5 à 4,3% en poids d'un polyisocyanate coiffé en présence d'un acide, organique ou minéral, hydrosoluble, et contient au moins un absorbant de l'ultraviolet.

2. Objet moulé en matière plastique selon la revendication 1, caractérisé en ce que la première couche présente une épaisseur de 100 à 30 000 nm, la seconde couche une épaisseur de 10 à 5 000 nm et la troisième couche une épaisseur de 1000 à 30 000 nm.

3. Objet moulé en matière plastique selon la revendication 1, caractérisé en ce que l'objet moulé en matière plastique et le revêtement cuit en trois couches sont transparents.

4. Procédé pour produire un revêtement selon la revendication 1, consistant en trois couches sur un objet moulé en matière thermoplastique, procédé caractérisé en ce qu'om applique à l'aide de produits pour revêtement en solution organique ou dispersion aqueuse contenant du solvant organique, contenant du liant, de l'absorbant de l'ultraviolet, de l'agent de protection contre les effets de la lumière et des adjuvants usuels, les trois couches par application et cuisson des produits de revêtement, en trois étapes opératoires successives.